Europäisches Patentamt

European Patent Office

Office européen des brevets

(11) Veröffentlichungsnummer: **0 267 496**
**A2**

## (12) EUROPÄISCHE PATENTANMELDUNG

(21) Anmeldenummer: 87115877.0

(51) Int. Cl.⁴: **B60J 1/18**

(22) Anmeldetag: 29.10.87

(30) Priorität: 08.11.86 DE 3638177

(43) Veröffentlichungstag der Anmeldung:
**18.05.88 Patentblatt 88/20**

(84) Benannte Vertragsstaaten:
**DE ES FR GB IT SE**

(71) Anmelder: **BAYERISCHE MOTOREN WERKE
Aktiengesellschaft
Postfach 40 02 40 Petuelring 130 - AJ-30
D-8000 München 40(DE)**

(72) Erfinder: **Altmann, Otto
Dieselstrasse 10
D-8011 Kichheim(DE)**
Erfinder: **Ball, Wilfried
Breslauer Strasse 24
D-8312 Dingolfing(DE)**

(74) Vertreter: **Bücken, Helmut
Bayerische Motoren Werke
Aktiengesellschaft Postfach 40 02 40
Petuelring 130 - AJ-30
D-8000 München 40(DE)**

(54) Flexible Sichtscheibe.

(57) Die flexible Heckscheibe eines Cabrolet-Verdecks ist mit einem vorgegebenen Faltbereich versehen. Aus optischen Gründen weist die erfindungsgemäße Heckscheibe abweichend vom bekannten Stand der Tecknik jedoch über ihrer gesamten Fläche eine konstante Materialdick auf. Der Faltbereich ist vielmehr durch einen sich vom umgebenden Kunststoff-Material unterscheidenden Material Elastizitätsmodul definiert.

*Fig. 2*
*(I')*

EP 0 267 496 A2

## Flexible Sichtscheibe

Die Erfindung bezieht sich auf eine flexible Sichtscheibe der im Oberbegriff des ersten Anspruchs angegebenen Art.

Derzeit werden flexible Scheiben - hergestellt insbesondere aus Thermoplasten - in zahlreichen Verkehrsmitteln eingesetzt. Teilweise aus mehreren unlösbar miteinander verbundenen Einzelschichten bestehend, sind diese Scheiben fest in starren oder flexiblen Rahmengestellen oder Stoffbespannungen fixiert. Der letztgenannte Fall findet vorrangig Verwendung bei faltbaren Kraftfahrzeugverdecken. Dabei wird im zusammengefalteten Zustand auch die Scheibe einer Faltung unterworfen. An den sich meist willkürlich ergebenden Knickstellen entstehen jedoch oftmals scharfe Kanten, was auf lange Sicht zu einer Zerstörung der Scheibe führt.

Eine Abhilfemaßnahme für dieses Problem ist in der gattungsbildenden DE-OS 33 47 551 vorgeschlagen. Hierin ist an der flexiblen Sichtscheibe im Bereich des gewünschten Faltenverlaufs jeweils eine Materialstärkenverringerung vorgesehen. Eine derartige Scheibe besitzt zwar eine definierte Knickkante, weist aber den großen Nachteil auf, daß auf Grund der unterschiedlichen Scheibendicke der Brechungsindex der Scheibe im Bereich dieser Kante wesentlich verändert ist. Das Bild, welches sich einem Betrachter bietet, der durch diese Scheibe blickt, ist vollkommen verwirrend. Da jedoch eine derartige Scheibe vor allem als Heckscheibe von Cabriolets zum Einsatz kommen soll, stellt diese Knickkante - erzeugt durch eine Materialstärkenverringerung - ein erhebliches Sicherheitsrisiko dar.

Aufgabe der vorliegenden Erfindung ist es daher, eine flexible Sichtscheibe mit mindestens einem vorgegebenen Faltbereich darzustellen, an welcher die Brechungsindizes über der gesamten Scheibenfläche nahezu gleich sind.

Diese Aufgabe wird durch die kennzeichnenden Merkmale des ersten Anspruches gelöst.

Eine konstante Materialdicke stellt einen über der gesamten Scheibenfläche konstanten Brechungsindex sicher. Auf diese Weise bietet sich dem Betrachter ein unverzerrtes, deutlich erkennbares Bild. Durch die unterschiedlichen Elastizitätsmodule ergibt sich jedoch eine sich selbsttätig immer wieder gleich einstellender Faltbereich. Erzeugen läßt sich ein bereichsweise unterschiedlicher Elastizitätsmodul beispielsweise durch eine spezielle Behandlung im Anschluß an die Scheibenherstellung; so kann durch örtliche kurzzeitige Wärmebehandlung eine ebenso örtlicher Weichmacherverlust im Kunstoff erzeugt werden, womit sich ein gegen der Umgebung verschiedener E-Modul einstellt.

Weitere Möglichkeiten zur Erzielung unterschiedlichen E-Module beschreiben die Unteransprüche.

Nach Anspruche 2 kann sich auch das im Faltbereich vorgesehene Material von dem umgebenden Kunstoff-Material unterscheiden. Die Brechungsindizes der verschiedenen Kunstoff-Materialien sind dabei annäherend gleich. Herstellungsverfahren für Kunststoffolien unter Verwendung verschiedener Materialien sind in der Kunststofftechnik hinreichend bekannt. Beispielshaft seien hier das Extruderverfahren oder das Kalander-Verfahren erwähnt. Während im Herstellungsprozeß der Scheibe bei ersterem über einen separaten Spritzkopf entlang des Faltbereiches ein unterschiedliches Material eingebracht wird, wird beim zweiten Verfahren eine separat mitlaufender Kunststoffstreifen eingewalzt, um im Anschluß daran mit dem umgebenden Material verschmolzen zu werden.

Anspruch 3 beschreibt eine weitere vorteilhafte Ausführungsform einer erfindungsgemäßen flexiblen Sichtscheibe. Dabei besteht diese aus mehreren aufeinander angeordneten Trägerfolien, deren E-Module verscheide sind. Weist nun eine der Folien entlang des Faltbereichs eine Einbuchtung, also eine Materialstärkenverringerung auf, und ist die darauf liegende nächste Folie mit einer entsprechenden Ausbuchtung, also einer Materialanhäufung versehen, so bleibt auch im Faltbereich die gesamte Scheibendicke konstant, wegen der unterschiedlichen Dicke der einzelnen Trägerfolien mit verschiedenen E-Modulen ergibt sich jedoch für den Faltbereich ein vom umgebenden Bereich verschiedener Elastizitätsmodul. Wie bekannt, werden diese einzelnen Trägerfolien im Herstellungsprozeß der Scheibe unlösbar miteinander verbunden, sozusagen miteinander verschmolzen.

Im folgenden wird die Erfindung anhand eines bevorzugten Ausführungsbeispiels näher beschrieben. Es zeigt:

Fig. 1 ein Kraftfahrzeug mit einem faltbaren Verdeck sowie einer erfindungsgemäßen flexiblen Sichtscheibe im Heckbereich

Fig. 2 die Teilansicht II aus Fig. 1 auf eine erfindungsgemäße flexible Sichtscheibe und

Fig. 3 den Schnitt III-III aus Fig. 2 durch eine Scheibe gemäß Anspruch 3

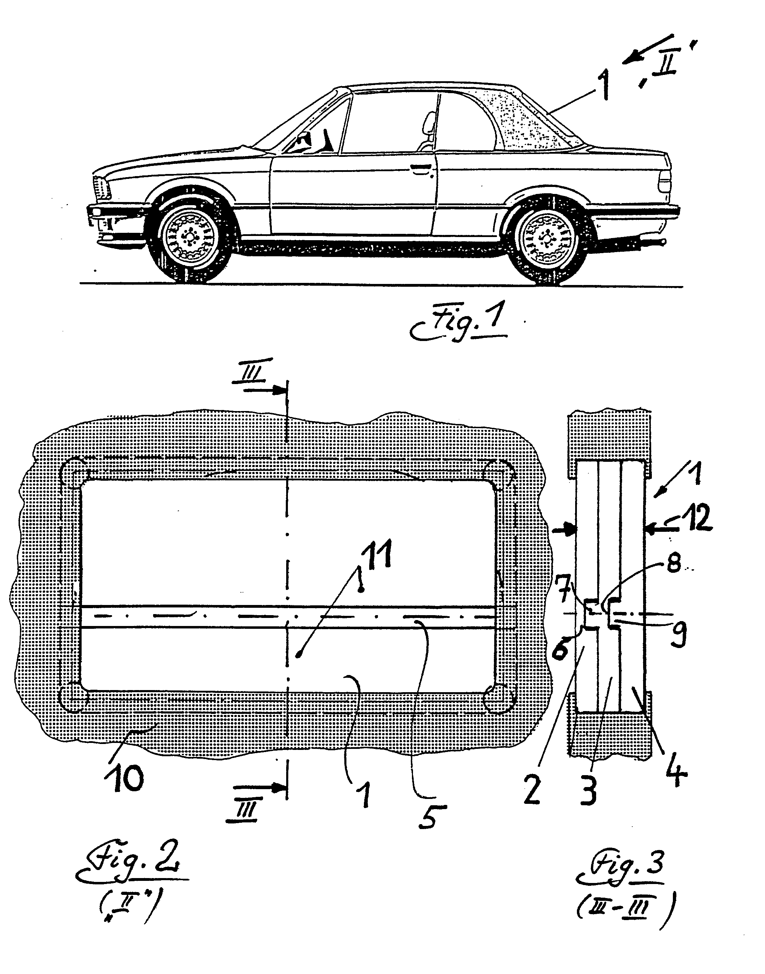

Ein Cabriolet in Fig. 1 ist mit einer flexiblen Sichtscheibe 1 (Heckfenster) versehen. Diese ist in das Verdeck 10 eingenäht und weist über ihrer gesamten Fläche eine konstante Materialdicke 12 auf. Für den Verdeck-Faltvorgang soll auch die Scheibe 1 entlang des Faltbereiches 5 geknickt werden. Erfindungsgemäß weist das im Faltbereich 5 angeordnete Material einen vom umgebenden Kunststoff-Material 11 der Scheibe 1 verschiedenen Elastizitätsmodul auf.

Fig. 3 zeigt einen Schnitt durch eine Scheibe nach Anspruch 3. Dabei ist diese Sichtscheibe 1 aufgebaut aus drei einzelnen, unlösbar miteinander verbundenen Trägerfolien 2, 3 und 4. Erfindungsgemäß ist entlang der Faltlinie 5 die innenliegende Trägerfolie 2 mit einer Einbuchtung 6, die mittig angeordnete Trägerfolie 3 sowohl mit einer Ausbuchtung 7 als auch einer Einbuchtung 8 und die außen liegende Trägerfolie 4 mit einer Ausbuchtung 9 versehen. Die einzelnen Trägerfolien 2, 3 und 4 werden nun beim Zusammenbau der Sichtscheibe 1 so aufeinander gelegt, daß sich stets eine Ausbuchtung in eine Einbuchtung einfügt (7 in 6 und 9 in 8). Somit bleibt die Dicke und damit der Brechungsindex über der gesamten Scheibenfläche unverändert bei gleichzeitiger Steifigkeits-und Moduländerung im Bereich der Faltlinie 5.

Beim Falten des Carbrioletverdeckes wird die Scheibe also immer an der vorgegebenen Faltlinie 5 abknicken, ohne dabei scharfe Kanten zu bilden, welche bekanntlich eine Schädigung der Scheibe zur Folge hätten.

## Ansprüche

1. Flexible Sichtscheibe aus Kunststoff-Material, insbesondere Fahrzeug-Faltscheibe, mit mindestens einem vorgegebenen Faltbereich,
dadurch gekennzeichnet, daß die Sichtscheibe (1) eine auch im Faltbereich (5) konstante Materialdick (12) aufweist, wohingegen der Elastizitätsmodul des Materials im Faltbereich (5) verschieden ist vom dem des den Faltbereich (5) umgebenden Materials (11).

2. Flexible Sichtscheibe nach Anspruch 1, dadurch gekennzeichnet, daß das im Faltbereich (5) befindliche Material verschieden ist vom dem den Faltbereich (5) umgebenden Kunststoff-Material (11).

3. Flexible Sichtscheibe nach Anspruch 1, dadurch gekennzeichnet, daß die Sichtscheibe (1) aus mindestens zwei aufeinander angeordneten Trägerfolien (2, 3, 4) besteht, deren Elastizitätsmodule verschieden sind, wobei eine der Trägerfolien (2) entlang des Faltbereichs (5) mit einer Einbuchtung (6) und die darüber angeordnete Trägerfolie (3) mit einer sich in die Einbuchtung (6) einfügenden Ausbuchtung (7) versehen ist.

0 267 496

Fig. 1

Fig. 2
( II' )

Fig. 3
( III - III )